# FASCICULE DE BREVET EUROPEEN

(11) **EP 0 829 079 B1**
(45) Date de publication et mention de la délivrance du brevet: **21.06.2000**
(21) Numéro de dépôt: 96911028.7
(22) Date de dépôt: 03.04.1996
(51) Int. Cl.: G10K 11/178

(54) **PROCEDE ET DISPOSITIF PERSONNELS D'ATTENUATION ACOUSTIQUE ACTIVE A REPONSE IMPULSIONELLE INVARIANTE**
PERSONALES VERFAHREN UND ANORDNUNG FÜR AKTIVE SCHALLDÄMPFUNG MIT INVARIANTER IMPULSANTWORT
PERSONAL ACTIVE NOISE CANCELLATION METHOD AND DEVICE HAVING INVARIANT IMPULSE RESPONSE

(30) Priorité: 04.04.1995 FR 9503969
(43) Date de publication de la demande: 18.03.1998
(73) Titulaire: TECHNOFIRST, 13670 Aubagne (FR); CENTRE NATIONAL DE LA RECHERCHE SCIENTIFIQUE (CNRS), 75016 Paris (FR)
(72) Inventeur: CARME, Christian, F-13008 Marseille (FR); ROURE, Alain, F-13011 Marseille (FR)
(74) Mandataire: Bratel, Gérard
(86) Numéro de dépôt international: FR9600508
(87) Numéro de publication internationale: WO9631872

(56) Documents cités:
- EP-A- 0 342 353
- EP-A- 0 601 934
- WO-A-89/11841
- WO-A-91/15896
- WO-A-94/25835
- WO-A-94/29845
- WO-A-94/29848
- WO-A-95/00946
- FR-A- 2 704 084
- GB-A- 2 149 614

## Description

La présente invention concerne l'atténuation acoustique active, c'est-à-dire l'opération qui permet d'atténuer certains sons, en superposant d'autres sons créés en opposition de phase avec les sons à atténuer.

Elle trouve une application générale dans l'insonorisation d'un espace de dimensions choisies, et plus particulièrement l'espace contenant au moins la tête d'un passager assis sur un siège d'un véhicule motorisé, tel qu'un aéronef ou une automobile, en vue d'améliorer le confort acoustique dudit passager.

Le Brevet US-A-5133017 (CAIN) propose un siège équipé d'un dispositif personnel d'atténuation acoustique active intégré dans l'appui-tête du siège. Le dispositif comprend deux voies disposées sur la face avant de l'appui-tête du siège. Chaque voie possède un haut-parleur relié à une couronne de microphones. Des moyens électroniques de commande reçoivent le bruit capté par les deux couronnes de microphones et délivrent, après traitement, un signal de commande d'atténuation du bruit pour chaque haut-parleur, afin de créer des sons en opposition de phase avec le bruit à atténuer.

L'agencement des microphones en couronne permet ici d'éviter la détérioration des performances en présence de mouvements de la tête de l'individu, ou en cas de masquage d'un point particulier de la couronne par des cheveux ou analogue. Mais cet évitement est obtenu au prix d'une complexité de mise en oeuvre (due notamment au nombre de microphones à implémenter) et à la nécessité de calculer la valeur moyenne des bruits captés par chaque couronne de microphones afin d'améliorer le rendu acoustique du signal de commande d'atténuation.

La présente invention remédie à ces inconvénients.

Elle porte sur un procédé personnel d'atténuation acoustique active comprenant les étapes suivantes:
- a) on prévoit une source propre à délivrer un signal d'atténuation active pour réduire un bruit non désiré en réponse à un signal de commande reçu,
- b) on prévoit des moyens capteurs du bruit non désiré,
- c) on prévoit une structure acoustique propre à supporter la source ainsi que les moyens capteurs, à proximité de la tête d'un individu,
- d) on prévoit des moyens électroniques de commande propres à générer le signal de commande d'atténuation active pour la source,
- e) on applique, au préalable, un signal électrique choisi à l'entrée de la source, pour déterminer au moins la réponse impulsionnelle, pendant une durée prédéterminée, entre la sortie de la source et l'entrée des moyens capteurs, et
- f) on détermine, en temps réel, le signal de commande d'atténuation acoustique active, selon une loi de traitement prédéterminée, établie au moins selon la réponse impulsionnelle ainsi préalablement déterminée, pour minimiser l'énergie du signal délivré par les moyens capteurs.

Selon une définition générale de l'invention, l'étape c) consiste à aménager ladite structure acoustique en prévoyant des moyens de support et de protection délimitant un volume où sont logés les moyens capteurs et la source, ledit volume étant maintenu invariant, au moins pendant la détermination du signal de commande d'atténuation active et en présence de l'individu, ce qui permet de maintenir invariant la réponse impulsionnelle entre la sortie de la source et l'entrée des moyens capteurs.

Ainsi, grâce à l'invariance du volume contenant les moyens capteurs et la source et par conséquence à l'invariance de la réponse impulsionnelle entre la sortie de la source et l'entrée des moyens capteurs, la détermination du signal d'atténuation acoustique active a de moindres besoins de traitement.

La présente invention a également pour objet un dispositif personnel d'atténuation acoustique active pour mettre en oeuvre le procédé selon l'invention, et qui comprend:
- une source propre à délivrer un signal d'atténuation acoustique active pour réduire un bruit non désiré, en réponse à un signal de commande reçu,
- des moyens capteurs dudit bruit non désiré,
- une structure acoustique propre à supporter la source ainsi que les moyens capteurs, à proximité de la tête d'un individu,
- des moyens électroniques de commande propres à appliquer, au préalable, un signal électrique choisi à l'entrée de la source, pour déterminer au moins une réponse impulsionnelle, pendant une durée prédéterminée, entre la sortie de la source et l'entrée des moyens capteurs, et à déterminer, en temps réel, ledit signal de commande d'atténuation active selon une loi de traitement prédéterminée, établie au moins selon la réponse impulsionnelle ainsi préalablement déterminée, pour minimiser l'énergie du signal délivré par les moyens capteurs.

Selon une définition générale du dispositif selon l'invention, la structure acoustique comprend des moyens de support et de protection délimitant un volume où sont logés les moyens capteurs et la source, ledit volume étant maintenu invariant, au moins pendant la détermination du signal de commande d'atténuation acoustique active et en présence de l'individu, ce qui permet de maintenir invariant la réponse impulsionnelle entre la sortie de la source et l'entrée des moyens capteurs.

Selon un mode de réalisation préféré de l'invention, les moyens de support comprennent un caisson comprenant des parois sensiblement acoustiquement opaques, une ouverture destinée à être disposée à proximité de la tête de l'individu, et une cloison sensiblement acoustiquement opaque et divisant ledit caisson en des première et seconde cavités, la première cavité étant ouverte selon ladite ouverture et contenant les moyens capteurs, tandis que la source est supportée par la cloison de telle sorte que le signal issu de la source se propage directement dans la première cavité, vers l'ouverture du caisson.

En pratique, les moyens de protection comprennent une grille ou analogue, escamotable, recouverte d'un matériau sensiblement acoustiquement transparent, et destinée à être rabattue sur l'ouverture de la première cavité, afin de maintenir invariant le volume de ladite première cavité, même en présence de l'individu.

Selon l'invention, l'invariance de ces volume et réponse impulsionnelle est ainsi obtenue par des moyens mécaniques relativement simples et peu couteux, que l'on peut mettre en oeuvre à proximité de l'espace à atténuer acoustiquement, ce qui facilite l'obtention d'une atténuation acoustique active suffisante, et contribue encore à diminuer les coûts de mise en oeuvre de l'invention.

De préférence, la structure acoustique est totalement intégrée dans la partie supérieure d'un siège ou analogue.

Le dispositif décrit dans le Brevet US-A-5133017 (CAIN), mentionné ci-avant, utilise la technique d'atténuation acoustique active par rétroaction, appelée encore "feed back" qui est fondée sur la capture des sons émanant des points disposés à proximité des microphones. Cette technique a une efficacité relativement faible car elle atténue les bruits uniquement autour de la pluralité des points de capture des sons. Cette technique n'est donc pas totalement satisfaisante pour obtenir une atténuation acoustique dans un espace de dimensions choisies et plus particulièrement l'espace contenant la tête d'un passager assis sur un siège.

Le Brevet US-A-4 977 600 (ZIEGLER) décrit une autre technique d'atténuation acoustique active, appelée technique "synchrone".

La technique est ici fondée sur une opération qui permet d'atténuer des sons harmoniques en les faisant interférer avec un signal prédéterminé issu d'une référence synchrone et en opposition de phase.

Ce signal issu d'une référence synchrone est un signal synthétique (par exemple engendré par un synthétiseur piloté par le compte-tours des organes de motorisation de l'aéronef), global, non capté, et supposé correspondre à l'inverse du bruit à atténuer. Or, on observe, dans la pratique, que la cohérence entre un signal mesuré et sa modélisation (signal synthétique) est assez forte pour la parole (synthèse de la parole), mais elle est très faible pour le bruit.

Un tel dispositif ne peut donc servir qu'à atténuer un bruit composé d'une fréquence pure et de ses harmoniques. Il ne permet pas une atténuation active de bruit dans une large bande de fréquences. Cette technique n'est donc pas utilisable pour obtenir une atténuation acoustique active dans des milieux bruyants comportant des bruits aléatoires.

On connaît par ailleurs une atténuation acoustique active fondée sur la technique par anticipation dite encore "feed forward". Le Brevet FR 83 13502 décrit une telle technique appliquée notamment aux bruits large bande se propageant le long d'un guide tel qu'une gaine de ventilation. Dans ce brevet, une atténuation acoustique active est obtenue en sortie de gaine, en détectant en amont le bruit émanant du moteur de ventilation, en injectant un contre-bruit transversalement dans la gaine en fonction du bruit amont ainsi détecté, et en contrôlant l'atténuation acoustique résultante en détectant, en aval de l'injection du contre-bruit, le bruit résiduel se propageant dans la gaine.

La différence majeure entre la technique "synchrone" et la technique par anticipation est d'élaborer le contre-bruit en fonction d'une mesure microphonique du bruit amont se propageant dans l'espace à débruiter (technique "feed forward") au lieu d'un signal synthétique (technique "synchrone").

Il serait théoriquement possible d'utiliser la technique par anticipation pour l'insonorisation d'un espace de dimensions choisies contenant au moins la tête d'un passager assis sur un siège. Mais la complexité, l'interaction du passager avec les microphones et haut-parleurs, l'absence de connaissance sur la propagation du bruit dans cet espace et le coût d'un tel dispositif font que l'homme du métier n'a pas songé jusqu'à présent à la mettre en oeuvre dans cette application.

En revanche, les Demandeurs ont observé que l'absence de connaissance sur la propagation du bruit dans l'espace contenant la tête du passager n'est pas gênante, ce qui ouvre certaines possibilités.

Ainsi, le procédé selon l'invention est de type par anticipation, et comprend en outre l'étape suivante:
- g) on prévoit des moyens capteurs distants, disposés à un endroit choisi, et propres à capter, en temps réel, un bruit non désiré susceptible de se propager dudit endroit vers ledit espace, la loi de traitement étant établie en outre selon le bruit distant ainsi capté.

L'invention a également pour objet un espace débruité obtenu par le dispositif selon l'invention, ledit espace débruité étant indépendant, local, interchangeable, de dimensions "généreuses", et dont l'atténuation acoustique active est susceptible d'être augmentée au moins partiellement par celle d'un autre espace débruité qui recouvre au moins partiellement ledit espace.

D'autres caractéristiques et avantages de l'invention apparaîtront à la lumière de la description détaillée ci-après, et des dessins dans lesquels :
- la figure 1 est une représentation schématique du dispositif personnel d'atténuation acoustique active selon l'invention,
- la figure 2 représente, en vue latérale et en coupe partielle, un siège équipé d'un dispositif personnel d'atténuation selon l'invention,
- la figure 3 est une vue de dessus, représentant schématiquement l'espace débruité selon l'invention,
- la figure 4 est une vue latérale, en coupe, représentant schématiquement l'espace débruité selon l'invention, et
- la figure 5 est un diagramme qui montre l'atténuation acoustique active obtenue par un dispositif selon l'invention .

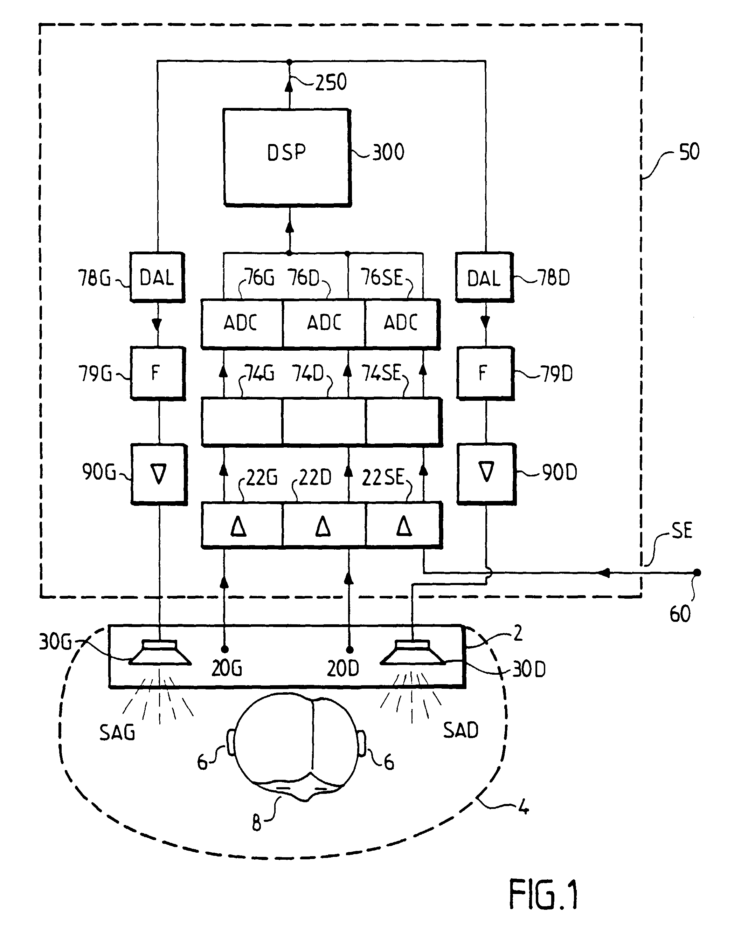

En référence à la figure 1, le dispositif personnel d'atténuation acoustique active comprend une structure acoustique 2 destinée à fournir un espace 4 d'atténuation acoustique active contenant au moins la tête (ici les oreilles 6) d'un individu 8.

Comme on le verra plus en détail ci-après, l'espace 4 est avantageusement celui qui contient la tête d'un passager assis sur un siège d'un véhicule motorisé, tel qu'un aéronef ou une automobile, en vue d'améliorer le confort acoustique du passager utilisant ledit siège. Dans d'autres applications, l'espace d'atténuation acoustique active peut être celui obtenu au voisinage d'un poste de travail ou d'une paroi dans laquelle est intégrée la structure acoustique 2.

D'une façon générale, le dispositif comprend, dans l'espace 4, une source 30 de sons et des moyens capteurs 20 de sons. Il peut être mono-voie ou multi-voies, c'est-à-dire que la source 30 peut comprendre un ou plusieurs transducteurs acoustiques tels que des haut-parleurs ou analogues et les moyens capteurs 20 peuvent comprendre un ou plusieurs transducteurs acoustiques tels que des microphones ou analogues (capteurs de pression). De préférence, le dispositif selon l'invention est à deux voies, chaque voie étant associée à une oreille. Les références des éléments constitutifs de la voie disposée à la droite du siège sont suivies de la lettre D tandis que les références des éléments constitutifs de la voie disposée à la gauche du siège sont suivies de la lettre G.

Des moyens électroniques de commande 50 génèrent le signal de commande d'atténuation active pour la source 30.

Dans l'application siège, les moyens électroniques de commande 50 sont fixés au niveau de la partie inférieure du siège.

Selon l'invention, on prévoit des moyens capteurs distants 60, disposés, de préférence hors de l'espace 4, pour capter un bruit SE non désiré, externe à l'espace et susceptible de se propager, de préférence sans guidage, dans l'espace 4 après un certain retard. Ces moyens capteurs distants 60 sont par exemple fixés à un pied du siège, comme on le verra plus en détail ci-après.

Il est à remarquer qu'en variante, le dispositif peut fonctionner avec un capteur distant disposé dans l'espace 4 à débruiter. Dans ce cas, il convient de mettre en oeuvre un algorithme qui filtre la perturbation causée par la source sur le capteur distant.

D'après le principe de base de l'atténuation acoustique active selon l'invention, les moyens de commande 50 appliquent, au préalable, un signal électrique choisi à l'entrée de la source pour déterminer au moins une réponse impulsionnelle H entre la sortie de la source 30 et l'entrée des moyens capteurs 20. Selon ladite réponse impulsionnelle H ainsi déterminée préalablement et le bruit distant SE ainsi capté en temps réel, les moyens électroniques de commande déterminent, en temps réel, les valeurs du signal de commande d'atténuation active selon une loi prédéterminée, établie pour minimiser au moins l'énergie du signal délivré par les moyens capteurs.

Il convient de remarquer ici que le dispositif personnel d'atténuation du bruit selon l'invention se distingue du Brevet US-4 977 600 cité ci-avant par le fait que l'atténuation active est ici large bande en fréquences dans la mesure où le signal capté SE par les moyens capteurs distants est lui aussi large bande en fréquences, à la différence du signal synthétique en bande étroite du Brevet susmentionné. Il en résulte une meilleure atténuation acoustique active.

Dans la suite de la description, le terme réponse impulsionnelle en domaine temporel est équivalent au terme fonction de transfert en domaine fréquentiel. De même, les algorithmes décrits ci-après sont ceux appartenant au domaine temporel, mais en pratique ils peuvent appartenir au domaine fréquentiel ou à une combinaison de ces deux domaines.

La structure détaillée et le fonctionnement du dispositif personnel d'atténuation de l'invention, dans le cas d'un bi-voies, sont les suivants.

Le microphone distant 60 attaque l'entrée d'un pré-amplificateur 22SE. La sortie du pré-amplificateur 22SE est reliée à l'entrée d'un filtre anti-recouvrement 74 SE (filtre dit anti aliasing). La sortie du filtre 74SE est reliée à l'entrée d'un convertisseur analogique/numérique 76SE dont la sortie est reliée à des moyens de traitement numérique 300 via un bus de données 200.

Par exemple, le convertisseur analogique/numérique 76SE est sur 12 bits.

De la même façon, chaque microphone 20G et 20D attaque l'entrée d'un pré-amplificateur respectif 22G et 22D. La sortie de chaque pré-amplificateur 22G et 22D est reliée à l'entrée d'un filtre anti-recouvrement respectif 74G et 74D. La sortie de chaque filtre 74G et 74D est reliée à l'entrée d'un convertisseur analogique/numérique respectif 76G et 76D dont la sortie est reliée aux moyens de traitement numérique 300 via le bus de données 200.

Les éléments de filtrage d'anti-recouvrement 74D, 74G et 74SE sont par exemple des filtres du type programmable ELLIPTIQUE d'ordre 7 à capacités commutées.

La sortie 250 des moyens de traitement numérique 300 pilote les deux voies d'atténuation acoustique active, la voie de droite D et la voie de gauche G. La voie de droite D comprend un convertisseur numérique/analogique 78D dont l'entrée est reliée à la sortie des moyens de traitement numérique 300 et dont la sortie attaque l'entrée d'un filtre de lissage 79D. La sortie du filtre 79D est reliée à l'entrée d'un amplificateur de puissance 90D dont la sortie attaque le haut-parleur 30D qui diffuse le signal d'atténuation acoustique active SAD. La voie de gauche G est symétrique à la voie de droite D et comprend les mêmes éléments que la voie de droite, à savoir : un convertisseur numérique/analogique 78G, un filtre de lissage 79G et un amplificateur de puissance 90G relié au haut-parleur 30G qui diffuse le signal d'atténuation acoustique active SAG.

Les amplificateurs de puissance 90D et 90G ont par exemple une puissance nominale 10 Watts efficaces sous 8 Ohms. Ils sont avantageusement de qualité Hi-Fi. Le taux de distorsion harmonique total est, par exemple, pour une puissance de 10 Watts efficaces, inférieur à 0,2%.

Les pré-amplificateurs 22D, 22G et 22SE sont par exemple des amplificateurs opérationnels standards.

Les moyens de traitement numérique 300 comprennent, par exemple, un processeur tel que celui vendu par la société TEXAS INSTRUMENTS sous la référence TMS320P25.

En pratique, lors de l'installation du dispositif dans l'aéronef ou bien dans un site de fabrication, il est nécessaire d'effectuer une étape de réglage ayant pour objectif de se placer au maximum de la dynamique des convertisseurs.

Ce réglage s'effectue, par exemple, en simulant un bruit non désiré à atténuer proche de celui à atténuer en fonctionnement à l'aide d'une chaîne électroacoustique (non représentée), par exemple une chaîne comprenant un organe de lecture à cassette, un amplificateur et une enceinte acoustique.

On règle la puissance de la chaîne électroacoustique afin de présenter au niveau de l'espace 4, un niveau de bruit équivalent à celui existant en fonctionnement, par exemple lorsque l'aéronef est en phase de vol.

La chaîne électroacoustique étant en fonctionnement, on règle la valeur du gain du préamplificateur 22SE afin de présenter à la sortie de ce préamplificateur, un niveau de signal proche, mais sensiblement inférieur, au niveau de signal admis par le convertisseur analogique/numérique 76SE. Un tel réglage permet d'être avantageusement au maximum de la dynamique de ce convertisseur. Ce réglage est répété pour les pré-amplificateurs 22D et 22G.

Après cette étape de réglage, on procède à la détermination de la réponse impulsionnelle de la façon suivante.

Les moyens de traitement numérique 300 envoient, tout d'abord, successivement sur chacun des convertisseurs 78, un signal d'identification choisi, par exemple un signal Dirac, un bruit blanc ou autre.

Avantageusement, on règle, ensuite, pour les voies de droite D et de gauche D, le gain des amplificateurs de droite 90D et de gauche 90G, afin que l'excitation des haut-parleurs de droite 30D et de gauche 30G produise à la sortie des préamplificateurs 22S et 22G, un niveau de signal proche de celui réglé lors de l'étape précédente relative au réglage dynamique des convertisseurs.

Une fois les gains des deux voies de sortie ainsi réglés, on détermine les effets des haut-parleurs sur les sorties des microphones 20, et on déduit les réponses impulsionnelles haut-parleurs/microphones.

En pratique, les réponses impulsionnelles sont mesurées pendant une durée prédéterminée, par exemple sur 80 points de mesure à la fréquence d'échantillonnage de 1000 Hz.

La détermination des réponses impulsionnelles peut être réalisée en configuration en boucle ouverte, c'est à dire dans une configuration dans laquelle la chaîne électroacoustique est coupée (c'est-à-dire au sol).

Cependant, les Demandeurs ont observé que les réponses impulsionnelles, obtenues en vol sont avantageusement sensiblement égales à celles en boucle ouverte dans la mesure où dans l'application siège, les microphones 20D et 20G étant proches des haut-parleurs 30D et 30G, le champ acoustique direct prédomine sur les réflexions.

C'est pourquoi, selon l'invention, la procédure d'identification des réponses impulsionnelles est avantageusement exécutée dans un site extérieur à l'application, par exemple en usine de fabrication.

Il en résulte une souplesse de l'utilisation du dispositif dans la mesure où il n'est pas nécessaire de concevoir une nouvelle électronique à chaque installation dudit dispositif dans une structure telle qu'un siège.

Par ailleurs, les réglages des gains sont avantageusement effectués au moyen de potentiomètres. En variante, des abaques peuvent donner pour un certain bruit à atténuer, les valeurs des potentiomètres des préamplificateurs d'entrée 22D et 22G et des amplificateurs de sortie 90D et 90G.

Dans l'application siège d'aéronef, le niveau de bruit à atténuer évoluant en fonction des conditions de vol (accélération, vitesse de croisière, turbulences) et de l'aéronef (à hélice, à réacteur, supersonique etc), un contrôle automatique du gain peut adapter, en permanence, les valeurs des gains d'entrée et de sortie afin d'être au maximum de la dynamique des convertisseurs d'entrée 76 et d'adapter le niveau sonore émis par les haut-parleurs.

En condition de vol, les moyens de commande 50 acquièrent périodiquement, et en temps réel, le bruit distant capté par les moyens capteurs distants. Ils calculent également l'énergie du signal, représentative de la somme des énergies des signaux délivrés par les moyens capteurs 20.

Ensuite, les moyens de traitement numérique, notamment des éléments de filtrage numériques (non représentés) sont placés en recherche du paramètre de convergence optimal. La connaissance, des réponses impulsionnelles préalablement mesurées et du bruit distant en temps réel, permet à un algorithme de minimisation choisi de déterminer, en temps réel, les valeurs du signal de commande d'atténuation acoustique active. Le but de la convergence est ici de minimiser l'énergie des signaux délivrés par les microphones disposés dans l'espace à débruiter.

Par exemple, l'algorithme de minimisation utilise la technique des Moindres Carrés Moyens.

Dans une configuration à une voie, c'est-à-dire avec un seul capteur, par exemple un microphone 20, et une seule source, par exemple un haut-parleur 30, la détermination des valeurs du signal de commande d'atténuation active prend en compte seulement la réponse impulsionnelle entre la sortie de la source et l'entrée des moyens capteurs préalablement mesurée, et le signal du capteur distant.

Dans une configuration à deux voies, la détermination des valeurs du signal de commande d'atténuation acoustique active est sensiblement similaire à celle de la configuration à une voie, elle s'en distingue par les interactions croisées entre les haut-parleurs 30G, 30D, et les microphones 20D, et 20G. Cependant, ces interactions croisées sont parfois négligeables. Dans ces conditions, on ne tient compte avantageusement que des réponses impulsionnelles directes, c'est-à-dire les réponses impulsionnelles entre capteur et source appartenant à la même voie.

Par ailleurs, il convient de remarquer que l'on a considéré ici que le bruit distant se propage sans altération jusqu'à l'espace à débruiter et que dans ces conditions, le bruit capté par les moyens capteurs distants 60 est sensiblement équivalent à celui capté par les moyens capteurs 20.

Or, en pratique, des altérations dans la propagation du bruit distant peuvent intervenir.

Dans ces conditions, la détermination du signal de commande d'atténuation est établie selon une loi qui prend en compte non seulement la réponse impulsionnelle entre la source 30 et les moyens capteurs 20, le bruit capté par les moyens capteurs 20 et le bruit capté par les moyens capteurs distants 60 (cas simple sans altération) mais aussi la réponse impulsionnelle entre la source 30 et les moyens capteurs distants 60 ainsi que la réponse impulsionnelle entre les moyens capteurs distants 60 et les moyens capteurs 20.

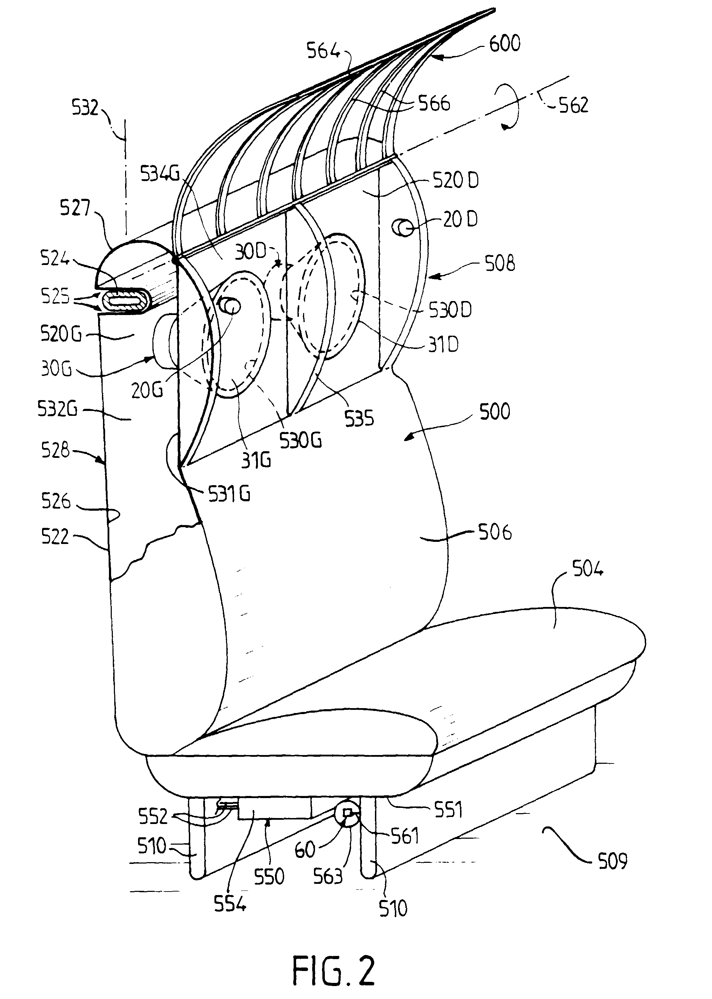

En référence à la figure 2, le siège 500 est équipé du dispositif d'atténuation selon l'invention. Il comprend classiquement une assise 504 et un dossier 506. Dans la partie supérieure du dossier 506, il est prévu un repose-tête 508. Ce siège 500 est prévu pour une personne.

L'ossature du dossier 506 est constituée par des parois 522 et une armature 524 comprenant une pluralité de tubes cintrés disposés entre les parois 522. La face interne 526 des parois 522 est avantageusement recouverte d'un matériau amortisseur du type laine minérale tandis que la face externe 528 des parois 522 est avantageusement recouverte d'un revêtement d'habillage du dossier 506. L'armature tubulaire 524 est logée dans une cavité 525 ménagée sur la face arrière des parois 522.

Le siège est par exemple celui d'un passager d'un aéronef, ou celui d'un passager d'une automobile.

Le siège repose sur le plancher 509 par l'intermédiaire de pieds 510. Il s'agit d'un siège tout à fait classique. Seule sa partie supérieure, au niveau du repose-tête, est modifiée pour recevoir en partie le dispositif d'atténuation selon l'invention.

Dans l'application siège, des moyens 520 supportent les deux haut-parleurs 30D et 30G et les deux microphones 20D et 20G. Ces moyens 520 comprennent deux caissons 520D et 520G identiques, associés chacun à une voie. Les caissons sont semi-fermés ou fermés, et incorporés dans le repose-tête 508.

Chaque caisson est dit semi-fermé parce qu'il est délimité par les parois non rigides et ajourées 522 de la face arrière du dossier. Ces parois sont acoustiquement opaques. Elles peuvent être, par exemple, de la laine de verre de quelques centimètres d'épaisseur.

Les deux caissons semi-fermés 520D et 520G sont séparés par une cloison centrale 535.

Pour simplifier la description, les éléments d'une seule voie (ici la gauche) sont décrits. Bien évidemment, cette description s'étend à la voie de droite mutatis mutandis.

Chaque caisson (par exemple celui associé à la voie de gauche 520G) comprend des parois acoustiquement opaques, une ouverture vers l'extérieur et à proximité de la tête de l'individu et une cloison transversale opaque acoustiquement 531G. Cette cloison 531G divise le caisson en deux demi-cavités avant 534G et arrière 532G. Elle supporte aussi le haut-parleur 30G. Le microphone 20G est quant à lui disposé dans la cavité avant 534G.

La partie supérieure du repose-tête qui forme une sorte de chapeau 527 reliant la cavité arrière 532G à la cavité avant 534G est avantageusement constituée d'une paroi rigide, afin d'arrêter la propagation de l'onde arrière du haut-parleur 30G vers le haut du siège.

Une ouverture 530G, est ménagée dans la cloison 531G pour le logement du haut-parleur dans le caisson 520G.

La cavité avant 534 est ménagée en avant de la membrane 31G du haut-parleur 30G.

A l'intérieur de la cavité avant 534G est logé le microphone 20G afin d'être disposé à proximité de l'espace à débruiter selon une loi géométrique que l'on décrira plus en détail ci-après.

Les Demandeurs ont observé que l'invariance de la réponse impulsionnelle entre la source et les moyens capteurs peut être obtenue par des moyens mécaniques relativement simples et peu couteux, que l'on peut mettre en oeuvre près de l'espace à atténuer acoustiquement, ce qui facilite l'obtention d'une atténuation acoustique suffisante, et contribue encore à diminuer les coûts de mise en oeuvre de l'invention.

Ce résultat est obtenu par des moyens de protection permettant de protéger les caissons acoustiques semi-fermés décrits ci-avant des instabilités acoustiques provenant par exemple du mouvement de la tête de l'individu ou d'intrusions mécaniques venant de l'extérieur dans les cavités avant 534D et 534G.

En référence à la figure 2, ces moyens de protection comprennent une grille 600 montée pivotante selon un axe horizontal 562 au niveau de la partie supérieure du repose-tête 508 (le dossier 506 est considéré comme s'étendant selon un axe vertical 532). La grille est représentée en position ouverte. Elle est susceptible d'être rabattue devant les cloisons 531, en position de fonctionnement. La grille protège ainsi les microphones et les membranes disposés dans chaque cavité avant 534G et 534D décrites ci-avant.

Il est à noter que la grille délimite le volume de chaque cavité avant 534 qui ainsi reste invariant, ce qui permet d'obtenir une réponse impulsionnelle invariante. La grille est acoustiquement transparente et rigide. Sa forme épouse avantageusement celle de l'appui-tête.

Cette grille 600 comprend par exemple des barreaux rectilignes 564 reliant des barreaux curvilignes 566. En variante, les moyens de protection comprennent une paroi ajourée et acoustiquement transparente.

En pratique, il est prévu de recouvrir la grille d'une mousse 602 à cellule ouverte acoustiquement transparente pour le confort du passager, ou une mousse anti-feu perforée. Cette mousse 602 est avantageusement recouverte d'un tissu 604 également acoustiquement transparent.

Par ailleurs, les moyens électroniques de commande 50 qui génèrent le signal de commande d'atténuation pour la source sont logés dans un boîtier 550 fixé sur la face inférieure 551 de l'assise 504.

En pratique, les moyens capteurs distants 60 sont disposés hors de l'espace 4 à débruiter pour capter un bruit non désiré, externe à l'espace 4 et susceptible de se propager librement dans ledit espace. Ces moyens capteurs distants sont par exemple un microphone 60 fixé à un pied 510 du siège par l'intermédiaire d'un support 561.

Avantageusement, le microphone distant 60 est protégé de l'extérieur par une grille 563 entourant ledit microphone distant.

En variante, le microphone distant 60 peut être remplacé ou complété par un accéléromètre. Les informations émanant de l'accéléromètre peuvent être utilisées comme un signal représentatif du bruit.

Des câbles ou connexions 552 sont prévus pour relier les moyens de commande 50 à la source 30, aux capteurs 20 ainsi qu'aux moyens capteurs distants 60. Le dispositif est totalement autonome dans la mesure où il comprend une entrée d'alimentation 554 reliée à l'alimentation embarquée de l'aéronef.

Pour obtenir une cohérence entre les moyens capteurs 20 et les moyens capteurs externes 60, le dispositif selon l'invention prévoit en outre un positionnement desdits moyens 20 et 60 sur des supports filtrant de façon passive les éventuelles perturbations vibratoires venant polluer les signaux acoustiques.

En pratique, les supports des microphones sont constitués d'un matériau du type élastomère.

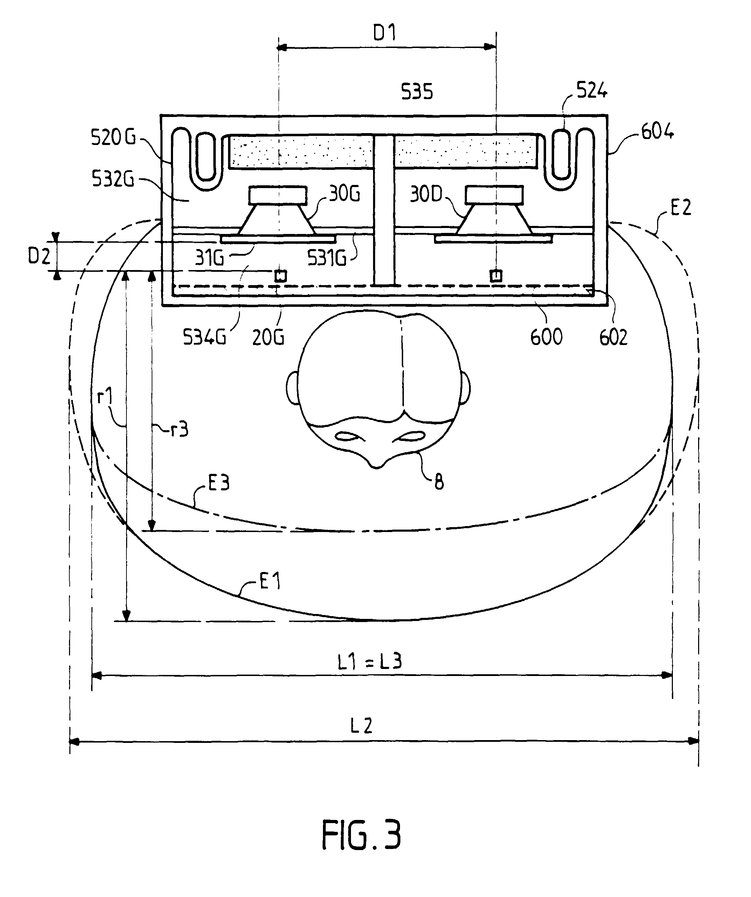

En référence à la figure 3, les haut-parleurs 30G et 30D sont disposés à proximité de la grille de protection 600, par exemple à une distance de quelques centimètres.

L'agencement géométrique des haut-parleurs et des microphones obéit à une loi géométrique choisie pour obtenir un espace débruité de dimensions choisies.

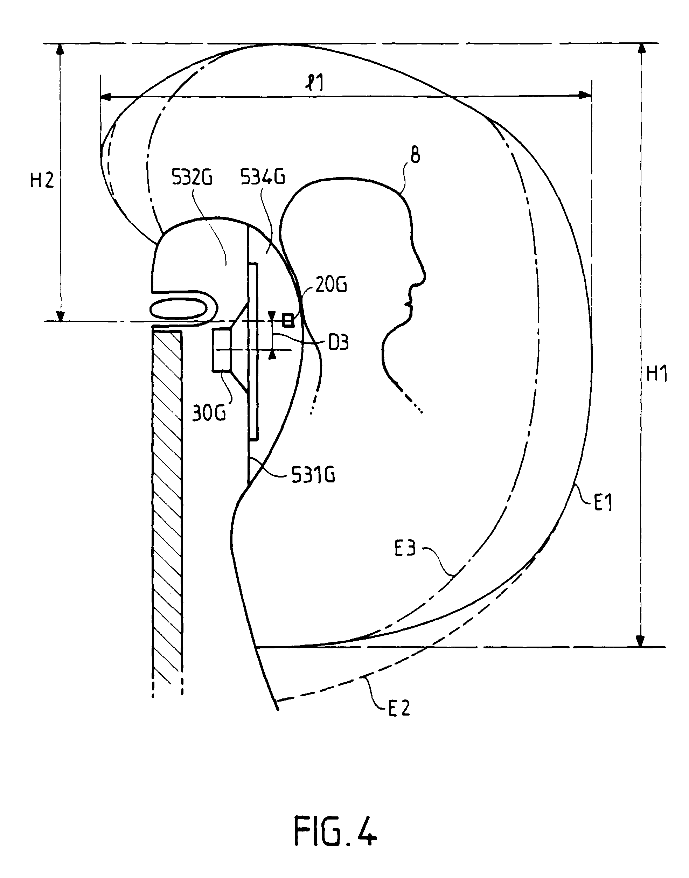

En référence aux figures 3 et 4, les Demandeurs ont obtenus des résultats significatifs avec la configuration suivante:
- distance D1 entre les deux microphones 20D et 20G, D1 = 17 cm,
- distance D2 entre la membrane du haut parleur 30D et du microphone 20G associé, D2 = 4 à 5 cm,
- distance D3 entre l'axe du haut-parleur 30G et l'axe du microphone 20G = 15 cm.

Les dimensions de l'espace d'atténuation acoustique active varient en fonction de la fréquence du bruit à atténuer (par exemple ici le bruit d'un moteur turbo-propulseur d'un aéronef).

Aux fréquences de 68 Hz (associé à l'espace E1), 136 Hz (E2) et 204 Hz (E3), les dimensions des espaces débruités E1, E2 et E3, présentant une atténuation supérieure ou égale à 3dB, sont les suivantes:
- longueur L1 de l'espace E1 : 55 cm,
- largeur 11 de l'espace E1, E2 : 48 cm,
- hauteur H1 de l'espace E1, E2 et E3 : 60 cm,
- longueur L2 de l'espace E2 : 67 cm,
- longueur L3 de l'espace E3 : 55 cm,
- largeur 13 de l'espace E2 : 23 cm,
- largeur r1 entre le microphone 20 et l'extrémité avant de l'espace E1 : 33cm, et
- largeur r3 entre le microphone 20 et l'extrémité avant de l'espace E3 : 23 cm,
- hauteur H2 entre le microphone 20 et l'extrémité supérieure de l'espace E1 ou E2 : 24cm.

Les atténuations suivantes ont été obtenues:
- atténuation de 12 dB obtenue à la fréquence fondamentale de 68 Hz à une distance de 10 cm du haut-parleur,
- atténuation de 30 dB, obtenue à la fréquence harmonique de 136 Hz à une distance de 10 cm du haut-parleur,
- atténuation de 25 dB, obtenue à la fréquence harmonique de 204 Hz à une distance de 10 cm du haut-parleur,

De plus, les Demandeurs ont observé que lorsque la distance D2 entre la membrane du haut parleur et du microphone associé augmente, l'atténuation acoustique active augmente.

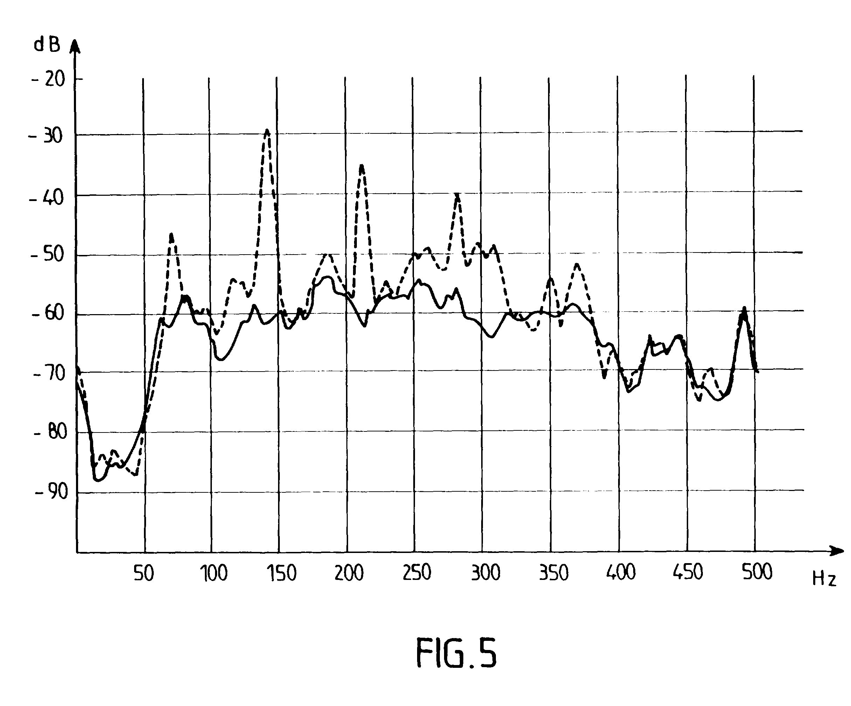

En référence à la figure 5, le bruit en dB est représenté en traits tiretés dans le dispositif selon l'invention et en traits forts avec le dispositif selon l'invention. Ces résultats ont été obtenus à une distance de 10 cm de la source, dans des conditions bruyantes moyennes, en vol stabilisé, dans un aéronef à turbo-propulseur.

Les Demandeurs ont observé qu'il existe un faible gradient de l'atténuation active dans l'espace délimité par rapport aux techniques classiques.

Par ailleurs, les Demandeurs ont observé que l'espace débruité ainsi obtenu constitue un espace débruité, individuel, local, interchangeable, de dimensions "généreuses", et dont l'atténuation acoustique active est susceptible d'être augmentée au moins partiellement par celle d'un autre espace débruité qui recouvre au moins partiellement ledit espace.- susceptible d'être additionné à un autre espace débruité, sans engendrer d'interférences parasites.

Ainsi, grâce à l'invention, il est possible d'obtenir une bonne atténuation acoustique dans un volume global de dimensions choisies correspondant sensiblement à l'union des espaces individuels débruités ainsi obtenus, avec possibilité de modifier à volonté les dimensions du volume global par simple ajout ou retrait d'espace individuel et avec possibilité d'interchanger un espace individuel avec un autre en cas de panne d'un dispositif individuel.

## Revendications

1. Procédé personnel d'atténuation acoustique active comprenant les étapes suivantes:
- a) on prévoit une source (30) propre à délivrer un signal d'atténuation active (SA) pour réduire un bruit non désiré en réponse à un signal de commande reçu,
- b) on prévoit des moyens capteurs (20) du bruit non désiré,
- c) on prévoit une structure acoustique (2) propre à supporter la source (30), ainsi que les moyens capteurs (20), à proximité de la tête d'un individu,
- d) on prévoit des moyens électroniques de commande (50) propres à générer le signal de commande d'atténuation active pour la source,
- e) on applique, au préalable, un signal électrique choisi à l'entrée de la source, pour déterminer au moins la réponse impulsionnelle (H), pendant une durée prédéterminée, entre la sortie de la source et l'entrée des moyens capteurs, et
- f) on détermine, en temps réel, le signal de commande d'atténuation acoustique active, selon une loi de traitement prédéterminée, établie au moins selon la réponse impulsionnelle ainsi préalablement déterminée, pour minimiser l'énergie du signal délivré par les moyens capteurs,
et dans lequel l'étape c) consiste à aménager ladite structure acoustique (2) en prévoyant des moyens de support et de protection (520, 600), délimitant un volume (564) où sont logés les moyens capteurs (20) et la source (30), ledit volume étant maintenu invariant, au moins pendant la détermination du signal de commande d'atténuation active et en présence de l'individu, ce qui permet de maintenir invariante la réponse impulsionnelle (H) entre la sortie de la source (30) et l'entrée des moyens capteurs (20).

2. Procédé selon la revendication 1, caractérisé en ce qu'il comprend en outre l'étape suivante:
- g) on prévoit des moyens capteurs distants (60), disposés à un endroit choisi, et propres à capter, en temps réel, un bruit non désiré susceptible de se propager dudit endroit vers un espace d'atténuation acoustique active contenant au moins la tête (6) d'un individu (8) la loi de traitement étant établie en outre selon le bruit distant ainsi capté.

3. Dispositif personnel d'atténuation acoustique active du type comprenant:
- une source (30) propre à délivrer un signal d'atténuation acoustique active (SA) pour réduire un bruit non désiré, en réponse à un signal de commande reçu,
- des moyens capteurs (20) dudit bruit non désiré,
- une structure acoustique (2) propre à supporter la source (30) ainsi que les moyens capteurs (20), à proximité de la tête d'un individu,
- des moyens électroniques de commande (50) propres à appliquer, au préalable, un signal électrique choisi à l'entrée de la source, pour déterminer au moins une réponse impulsionnelle (H), pendant une durée prédéterminée, entre la sortie de la source et l'entrée des moyens capteurs, et à déterminer, en temps réel, ledit signal de commande d'atténuation active selon une loi de traitement prédéterminée, établie au moins selon la réponse impulsionnelle ainsi préalablement déterminée, pour minimiser l'énergie du signal délivré par les moyens capteurs,
et dans lequel la structure acoustique (2) comprend des moyens de support et de protection (520, 600) délimitant un volume (534) où sont logés les moyens capteurs (20) et la source (30), ledit volume étant maintenu invariant, au moins pendant la détermination du signal de commande d'atténuation acoustique active et en présence de l'individu, ce qui permet de maintenir invariante la réponse impulsionnelle (H) entre la sortie de la source (30) et l'entrée des moyens capteurs (20).

4. Dispositif selon la revendication 3, caractérisé en ce que les moyens de support (520) comprennent un caisson comprenant des parois sensiblement opaques acoustiquement, une ouverture destinée à être à proximité de la tête de l'individu, et une cloison sensiblement opaque acoustiquement et divisant ledit caisson en des première (534) et seconde (532) cavités, la première cavité (534) étant ouverte selon ladite ouverture et contenant les moyens capteurs (20), tandis que la source est supportée par la cloison de telle sorte que le signal issu de la source se propage directement dans la première cavité, vers l'ouverture du caisson.

5. Dispositif selon la revendication 4, caractérisé en ce que les moyens de protection (600) comprennent une grille ajourée ou analogue, escamotable, recouverte d'un matériau sensiblement acoustiquement transparent et destinée à être rabattue sur l'ouverture de la première cavité (534), afin de maintenir invariant le volume de ladite première cavité (534), même en présence de l'individu.

6. Dispositif selon l'une des revendications 3 à 5, caractérisé en ce que la structure acoustique (2) est totalement intégrée dans la partie supérieure d'un siège ou analogue.

7. Dispositif selon l'une des revendications 3 à 6, caractérisé en ce que les moyens capteurs (20) comprennent au moins un microphone ou analogue.

8. Dispositif selon la revendication 3, caractérisé en ce qu'il comprend en outre des moyens capteurs distants (60) disposés à un endroit choisi, et propres à capter, en temps réel, un bruit non désiré, susceptible de se propager dudit endroit vers un espace (4) d'atténuation acoustique active contenant au moins la tête (6) d'un individu (8), et en ce que les moyens électroniques de commande déterminent le signal de commande d'atténuation active selon en outre le bruit distant ainsi capté.

9. Dispositif selon la revendication 8, caractérisé en ce que les moyens capteurs distants (60) comprennent au moins un microphone et/ou un accéléromètre.

10. Dispositif selon l'une des revendications 8 à 9, caractérisé en ce que les moyens capteurs distants (60) sont unidirectionnels, orientables et logés dans une structure protectrice (563) contre les intrusions mécaniques.

11. Dispositif selon l'une des revendications 3 à 10, caractérisé en ce que la source (30) comprend au moins un haut-parleur ou analogue.

12. Dispositif selon l'une des revendications 3 à 10, caractérisé en ce que les moyens capteurs et/ou les moyens capteurs distants sont montés sur des moyens amortisseurs propres à amortir les vibrations parasites.

13. Structure acoustique de type siège ou analogue logeant un dispositif personnel d'atténuation acoustique active selon l'une des revendications 3 à 12.

14. Installation d'atténuation acoustique active comprenant une pluralité de structures acoustiques selon la revendication 13, disposées de façon adjacente, en vue d'additionner les atténuations acoustiques obtenues par lesdites structures acoustiques et obtenir ainsi un espace débruité global résultant de cette addition.

## Patentansprüche

1. Personales Verfahren für aktive Schalldämpfung, die folgenden Schritte umfassend:
- a) eine Quelle (30), die geeignet ist, ein aktives Schalldämpfungssignal (SA) abzugeben, um auf ein empfangenes Steuersignal hin ein unerwünschtes Geräusch zu reduzieren,
- b) Aufnehmermittel (20) für das unerwünschte Geräusch,
- c) eine akustische Struktur (2), die geeignet ist, die Quelle (30) sowie die Aufnehmermittel (20) in der Nähe des Kopfes einer Person zu tragen,
- d) elektronische Steuermittel (50), die geeignet sind, das Steuersignal für aktive Schalldämpfung für die Quelle zu erzeugen,
- e) ein zuvor am Eingang der Quelle eingespeistes ausgewähltes elektrisches Signal, um zumindest die Impulsantwort (H) während eines vorherbestimmten Zeitraums zwischen dem Ausgang der Quelle und dem Eingang der Aufnehmermittel zu bestimmen, und
- f) die Bestimmung des Steuersignals für die aktive Schalldämpfung in Echtzeit gemäß einer vorherbestimmten Verarbeitungsregel, die zumindest nach der derart im voraus bestimmten Impulsantwort festgelegt ist, um die Energie des von den Aufnehmermitteln abgegebenen Signals zu minimieren,
und in dem der Schritt c) darin besteht, die akustische Struktur (2) so einzurichten, daß Trage- und Schutzvorrichtungen (520, 600) vorgesehen sind, die einen Raum (564) abgrenzen, wo die Aufnehmermittel (20) und die Quelle (30) untergebracht sind, wobei dieser Raum invariant gehalten ist, zumindest während der Bestimmung des Steuersignals für die aktive Dämpfung und in Gegenwart der Person, was es erlaubt, die Impulsantwort (H) zwischen dem Ausgang der Quelle (30) und dem Eingang der Aufnehmermittel (20) invariant zu halten.

2. Verfahren nach Anspruch 1, dadurch gekennzeichnet, daß es außerdem die folgenden Schritte umfaßt:
- g) entfernte Aufnehmermittel (60), die an einem ausgewählten Ort angeordnet und geeignet sind, ein unerwünschtes Geräusch in Echtzeit aufzufangen, das sich von diesem Ort nach einem Raum mit aktiver Schalldämpfung, der zumindest den Kopf (6) einer Person (8) umfaßt, ausbreiten kann, wobei die Verarbeitungsregel im übrigen gemäß dem so aufgefangenen entfernten Geräusch festgelegt ist.

3. Personale Anordnung für aktive Schalldämpfung des Typs, der umfaßt:
- eine Quelle (30), die geeignet ist, ein aktives Schalldämpfungssignal (SA) auf ein empfangenes Steuersignal hin abzugeben, um ein unerwünschtes Geräusch zu reduzieren,
- Aufnehmermittel (20) für das unerwünschte Geräusch,
- eine akustische Struktur (2), die geeignet ist, die Quelle (30) sowie die Aufnehmermittel (20) in der Nähe des Kopfes einer Person zu tragen,
- elektronische Steuermittel (50), die geeignet sind, ein ausgewähltes elektrisches Signal zuvor am Eingang der Quelle einzuspeisen, um zumindest während eines vorherbestimmten Zeitraums eine Impulsantwort (H) zwischen dem Ausgang der Quelle und dem Eingang der Aufnehmermittel zu bestimmen, und um das Steuersignal für die aktive Schalldämpfung nach einer vorherbestimmten Verarbeitungsregel in Echtzeit zu bestimmen, die zumindest nach der derart im voraus bestimmten Impulsantwort festgelegt ist, um die Energie des von den Aufnehmermitteln abgegebenen Signals zu minimieren,
und in dem die akustische Struktur (2) Trage- und Schutzvorrichtungen (520, 600) umfaßt, die einen Raum (534) abgrenzen, wo die Aufnehmermittel (20) und die Quelle (30) untergebracht sind, wobei dieser Raum invariant gehalten ist, zumindest während der Bestimmung des Steuersignals für die aktive Schalldämpfung und in Gegenwart der Person, was es erlaubt, die Impulsantwort (H) zwischen dem Ausgang der Quelle (30) und dem Eingang der Aufnehmermittel (20) invariant zu halten.

4. Anordnung nach Anspruch 3, dadurch gekennzeichnet, daß die Tragevorrichtungen (520) ein Gehäuse umfassen, das deutlich schallundurchlässige Wände, eine Öffnung in der Nähe des Kopfes der Person und eine deutlich schallundurchlässige Trennwand umfaßt, die das Gehäuse in einen ersten (534) und einen zweiten (532) Hohlraum teilt, wobei der erste Hohlraum (534) offen ist gemäß der genannten Öffnung und die Aufnehmermittel (20) umfaßt, während die Quelle von der Trennwand in der Weise getragen ist, daß das von der Quelle ausgesandte Signal sich direkt in dem ersten Hohlraum, nach der Öffnung des Gehäuses hin, ausbreitet.

5. Anordnung nach Anspruch 4, dadurch gekennzeichnet, daß die Schutzvorrichtungen (600) ein hochziehbares gelochtes oder ähnliches Gitter umfassen, das mit einem deutlich schalldurchlässigen Material beschichtet ist und dazu dient, über die Öffnung des ersten Hohlraums (534) geklappt zu werden, um den Raum dieses ersten Hohlraums (534) auch in Gegenwart der Person invariant zu halten.

6. Anordnung nach einem der Ansprüche 3 bis 5, dadurch gekennzeichnet, daß die akustische Struktur (2) gänzlich im oberen Teil eines Sitzes oder ähnlichem eingebaut ist.

7. Anordnung nach einem der Ansprüche 3 bis 6, dadurch gekennzeichnet, daß die Aufnehmermittel (20) mindestens ein Mikrofon oder ähnliches umfassen.

8. Anordnung nach Anspruch 3, dadurch gekennzeichnet, daß sie außerdem entfernte Aufnehmermittel (60) umfaßt, die an einem ausgewählten Ort angeordnet und geeignet sind, in Echtzeit ein unerwünschtes Geräusch aufzufangen, das sich von diesem Ort nach einem Raum (4) mit aktiver Schalldämpfung, der zumindest den Kopf (6) einer Person (8) enthält, ausbreiten kann, und dadurch gekennzeichnet, daß die elektronischen Steuermittel das Steuersignal für aktive Schalldämpfung auch gemäß dem so aufgefangenen entfernten Geräusch bestimmen.

9. Anordnung nach Anspruch 8, dadurch gekennzeichnet, daß die entfernten Aufnehmermittel (60) zumindest ein Mikrofon und/oder einen Beschleunigungsmesser umfassen.

10. Anordnung nach einem der Ansprüche 8 bis 9, dadurch gekennzeichnet, daß die entfernten Aufnehmermittel (60) in einer Richtung wirkend, verstellbar und in einer Schutzvorrichtung (563) gegen mechanische Erschütterungen gelagert sind.

11. Anordnung nach einem der Ansprüche 3 bis 10, dadurch gekennzeichnet, daß die Quelle (30) zumindest einen Lautsprecher oder ähnliches umfaßt.

12. Anordnung nach einem der Ansprüche 3 bis 10, dadurch gekennzeichnet, daß die Aufnehmermittel und/oder die entfernten Aufnehmermittel auf Dämpfungsmitteln montiert sind, die geeignet sind, die parasitären Vibrationen zu dämpfen.

13. Akustische Struktur des Typs Sitz oder ähnlichem, die zumindest teilweise eine personale Anordnung für aktive Schalldämpfung nach einem der Ansprüche 3 bis 12 aufnimmt.

14. Einrichtung für aktive Schalldämpfung, die eine Vielzahl von akustischen Strukturen nach Anspruch 13 umfaßt, die nebeneinander angeordnet sind mit dem Ziel, die von diesen akustischen Strukturen erhaltenen Schalldämpfungen zu addieren und als Ergebnis dieser Addition so einen geräuschfreien Gesamtraum zu erhalten.

## Claims

1. A personal method for active acoustic attenuation comprising the following stages:
- a) a source (30) is provided that is suitable to deliver an active attenuation signal (SA) in order to reduce an unwanted noise in response to a received control signal,
- b) sensor means (20) are provided for picking up the unwanted noise,
- c) an acoustic structure (2) is provided that is suitable to support the source (30) as well as the sensor means (20) in proximity to the head of an individual,
- d) electronic control means (50) are provided that are suitable to generate the active attenuation control signal for the source,
- e) a selected electrical signal is applied beforehand to the input of the source in order to determine at least the impulse response (H), during a predetermined period, between the output of the source and the input of the sensor means, and
- f) in real time the active acoustic attenuation control signal is determined in accordance with a predetermined processing rule that is established at least in accordance with the impulse response as determined previously, in order to minimize the energy of the signal delivered by the sensor means,
wherein stage c) consists in converting said acoustic structure (2) while providing means of support and protection (520, 600), delimiting a volume (564) where the sensor means (20) and the source (30) are accommodated, said volume being maintained invariant, at least during the determination of the active attenuation control signal and in the presence of the individual, permitting the impulse response (H) between the output of the source (30) and the input of the sensor means (20) to be maintained invariant.

2. A method as claimed in claim 1, comprising moreover the following stage:
- g) remote sensor means (60) are provided, disposed at a chosen location and suitable to pick up, in real time, an unwanted noise that is capable of being propagated from said location towards an active acoustic attenuation space containing at least the head (6) of an individual (8), the processing rule being established moreover in accordance with the remote noise picked up in this manner.

3. A personal device for active acoustic attenuation, of the type comprising:
- a source (30) that is suitable to deliver an active acoustic attenuation signal (SA) in order to reduce an unwanted noise in response to a received control signal,
- sensor means (20) for picking up said unwanted noise,
- an acoustic structure (2) that is suitable to support the source (30) as well as the sensor means (20) in proximity to the head of an individual,
- electronic control means (50) that are suitable to apply, beforehand, a selected electrical signal to the input of the source in order to determine at least one impulse response (H), during a predetermined period, between the output of the source and the input of the sensor means and to determine, in real time, said active attenuation control signal in accordance with a predetermined processing rule that is established at least in accordance with the impulse response as determined previously, in order to minimize the energy of the signal delivered by the sensor means,
wherein the acoustic structure (2) comprises means of support and protection (520, 600) delimiting a volume (534) where the sensor means (20) and the source (30) are accommodated, said volume being maintained invariant, at least during the determination of the active acoustic attenuation control signal and in the presence of the individual, permitting the impulse response (H) between the output of the source (30) and the input of the sensor means (20) to be maintained invariant.

4. A device as claimed in claim 3, wherein the support means (520) comprise a casing comprising substantially acoustically opaque walls, an opening intended to be in proximity to the head of the individual and a partition which is substantially acoustically opaque and which divides said casing into first (534) and second (532) cavities, the first cavity (534) being open in accordance with said opening and containing the sensor means (20), whereas the source is supported by the partition in such a manner that the signal emitted from the source is propagated directly into the first cavity, towards the opening in the casing.

5. A device as claimed in claim 4, wherein the means of protection (600) comprise an open-worked grille or a similar device which is retractable, covered with a substantially acoustically transparent material and intended to be folded over the opening in the first cavity (534) in order to maintain invariant the volume of said first cavity (534), even in the presence of the individual.

6. A device as claimed in one of claims 3 to 5, wherein the acoustic structure (2) is totally integrated within the upper part of a seat or a similar object.

7. A device as claimed in one of claims 3 to 6, wherein the sensor means (20) comprise at least one microphone or a similar device.

8. A device as claimed in claim 3, comprising moreover remote sensor means (60) disposed at a chosen location and suitable to pick up, in real time, an unwanted noise that is capable of being propagated from said location towards a space (4) of active acoustic attenuation containing at least the head (6) of an individual (8), and wherein the electronic control means determine the active attenuation control signal in accordance moreover with the remote noise picked up in this manner.

9. A device as claimed in claim 8, wherein the remote sensor means (60) comprise at least one microphone and/or one accelerometer.

10. A device as claimed in one of claims 8 to 9, wherein the remote sensor means (60) are unidirectional, capable of swivelling and accommodated within a structure (563) that protects against mechanical intrusions.

11. A device as claimed in one of claims 3 to 10, wherein the source (30) comprises at least one loudspeaker or a similar device.

12. A device as claimed in one of claims 3 to 10, wherein the sensor means and/or the remote sensor means are mounted on damping means that are suitable to damp parasitical vibrations.

13. An acoustic structure of seat type or similar, accommodating, at least in part, a personal device for active acoustic attenuation as claimed in one of claims 3 to 12.

14. The installation of an active acoustic attenuation system comprising a plurality of acoustic structures as claimed in claim 13, disposed in adjacent manner with a view to adding the acoustic attenuations obtained by said acoustic structures and in this manner obtaining a global noise-reduced space resulting from this addition.
